# EUROPÄISCHE PATENTSCHRIFT

(11) **EP 0 459 294 B1**
(45) Veröffentlichungstag und Bekanntmachung des Hinweises auf die Patenterteilung: **01.03.1995**
(21) Anmeldenummer: 91108310.3
(22) Anmeldetag: 23.05.1991
(51) Int. Cl.: G01D 5/00, G01D 5/06

(54) **Positionsmesseinrichtung**
Position measuring device
Dispositif pour mesurer une position

(30) Priorität: 31.05.1990 DE 9006138 U
(43) Veröffentlichungstag der Anmeldung: 04.12.1991
(73) Patentinhaber: Dr. Johannes Heidenhain GmbH, D-83292 Traunreut (DE)
(72) Erfinder: Nelle, Günther, Dr., W-8221 Bergen (DE)

(56) Entgegenhaltungen:
- DE-A- 3 415 514
- DE-C- 2 611 459
- DE-C- 3 215 334

## Beschreibung

Die Erfindung betrifft eine Positionsmeßeinrichtung gemäß dem Oberbegriff des Anspruches 1.

Derartige Positionsmeßeinrichtungen werden insbesondere bei Bearbeitungsmaschinen zur Messung der Relativlage eines Werkzeugs bezüglich eines zu bearbeitenden Werkstücks eingesetzt.

Bei Meßeinrichtungen mit einer Abtasteinheit, die an einer von der Führung der beiden Objekte in Form der Maschinenteile unabhängigen Hilfsführung geführt ist, ist eine gelenkige Ankopplung an das zugehörige Objekt bzw. an einen daran angeordneten Mitnehmer unerläßlich.

In der DE-PS 26 11 459 ist eine Positionsmeßeinrichtung beschrieben, bei der eine Abtasteinheit zur Abtastung der Teilung eines Teilungsträgers an einer von der Führung der beiden Objekte, deren gegenseitige Relativlage gemessen werden soll, unabhängigen Hilfsführung verschiebbar und an einen Mitnehmer über eine in Meßrichtung steife Kupplung gelenkig angekoppelt ist. Der erste Kupplungsteil dieser Kupplung besteht aus einer Planfläche an der Abtasteinheit, die mit einer sphärischen Fläche des zweiten Kupplungsteils am Mitnehmer mittels einer Feder in ständigem Kontakt steht. Bei dieser Ankopplungsart treten jedoch durch Parallelversatz und Winkelfehler zwischen der Führung der beiden Objekte und der Hilfsführung Relativbewegungen zwischen der Planfläche und der sphärischen Fläche auf, die durch die dabei auftretende Gleitreibung zu einem Verschleiß dieser beiden Kupplungsteile führen und damit Meßungenauigkeiten zur Folge haben, die bei hochpräzisen Positionsmeßeinrichtungen nicht mehr tolerierbar sind.

Der Erfindung liegt die Aufgabe zugrunde, bei einer Positionsmeßeinrichtung der genannten Gattung Verschleißerscheinungen zwischen den beiden Kupplungsteilen bei auftretenden gegenseitigen Relativbewegungen und dadurch bedingte Meßungenauigkeiten auszuschließen.

Diese Aufgabe wird erfindungsgemäß durch das kennzeichnende Merkmal des Anspruches 1 gelöst.

Die mit der Erfindung erzielten Vorteile bestehen insbesondere darin, daß durch das Vorsehen einer Gleitschicht zwischen den beiden Kupplungsteilen der Kupplung bei gegenseitigen Relativbewegungen kein meßbarer Verschleiß zwischen den beiden Kupplungsteilen entsteht, so daß keine Meßungenauigkeiten mehr auftreten können.

Vorteilhafte Ausbildungen der Erfindung entnimmt man den Unteransprüchen.

Ein Ausführungsbeispiel der Erfindung wird anhand der Zeichnung näher erläutert.

Es zeigen
- Figur 1: eine Positionsmeßeinrichtung in einer teilweise geschnittenen Seitenansicht und
- Figur 2: einen vergrößerten Ausschnitt einer Kupplungsausbildung.

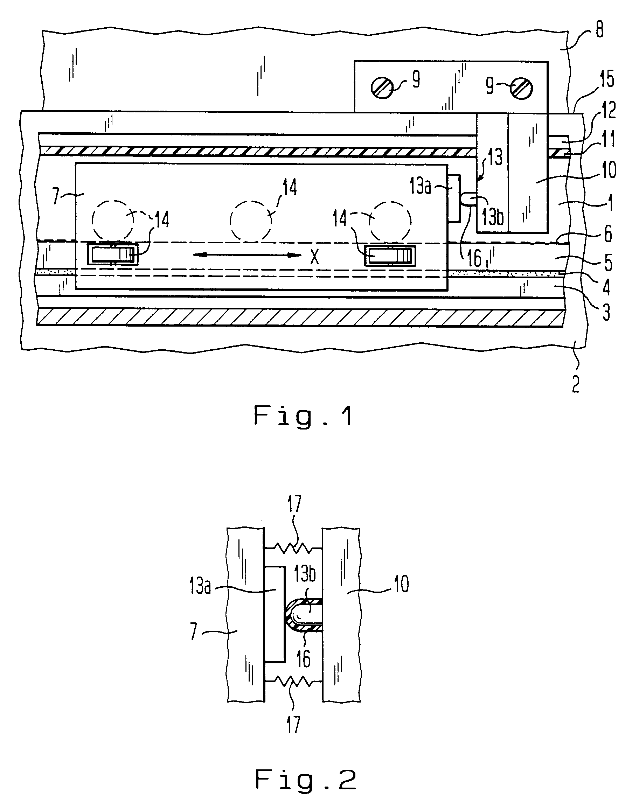

In Figur 1 ist eine Positionsmeßeinrichtung in einer teilweise geschnittenen Seitenansicht gezeigt, deren Gehäuse 1 an einem Schlitten 2 einer nicht dargestellten Bearbeitungsmaschine in beliebiger Weise befestigt ist. Auf einem Steg 3 im Inneren des Gehäuses 1 ist mittels einer Klebeschicht 4 ein Teilungsträger 5 angebracht, dessen Teilung 6 von einer Abtasteinheit 7 in beliebiger bekannter Weise abgetastet wird.

Am Bett 8 der Bearbeitungsmaschine ist mittels Schrauben 9 ein doppelschwertförmiger Mitnehmer 10 befestigt, der durch einen von zwei Dichtlippen 11 verschlossenen Längsschlitz 12 in das Gehäuse 1 hineingreift und über eine Kupplung 13 mit der Abtasteinheit 7 verbunden ist. Die Abtasteinheit 7 ist mittels Rollen 14 auf zwei Oberflächen des Teilungsträgers 5 geführt, die eine von einer Führung 15 des Schlittens 2 bezüglich des Betts 8 unabhängige Hilfsführung für die Abtasteinheit 7 bilden. Der Schlitten 2 und das Bett 8 der Bearbeitungsmaschine stellen die beiden Objekte dar, deren Relativlage in Meßrichtung X gemessen werden soll.

Die Kupplung 13 besteht aus einem ersten Kupplungsteil 13a in Form einer an der Abtasteinheit 7 befestigten ebenen Platte, vorzugsweise aus Hartmetall oder aus poliertem Glas, deren Planfläche senkrecht zur Meßrichtung X verläuft, und aus einem zweiten Kupplungsteil 13b in Form eines am Mitnehmer befestigten, in Meßrichtung X verlaufenden Stiftes mit einer sphärischen Stirnfläche. Zwischen dem ersten ebenen Kupplungsteil 13a und dem zweiten sphärischen Kupplungsteil 13b der Kupplung 13 befindet sich erfindungsgemäß eine Gleitschicht 16 in Form einer dünnen Gleitfolie, beispielsweise mit einer Stärke von 0,1 - 0,2 mm; diese Gleitfolie 16 besteht vorzugsweise aus einem PTFE-haltigen Kunststoff.

Figur 2 zeigt einen vergrößerten Ausschnitt dieser Kupplungsausbildung. Die sphärische Stirnfläche des Stiftes des zweiten Kupplungsteils 13b ist mit dieser Gleitschicht 16 überzogen, die mit der Planfläche des ersten ebenen Kupplungsteil 13a durch zwei Federn 17 in ständigem Kontakt steht, die an der Abtasteinheit 7 und am Mitnehmer 10 befestigt sind.

In nicht dargestellter Weise kann auch der erste ebene Kupplungsteils 13a am Mitnehmer 10 und der zweite sphärische Kupplungsteil 13b an der Abtasteinheit 7 befestigt sein. Der erste ebene Kupplungsteil 13a kann auch in der Abtasteinheit 7 integriert sein, so daß die Stirnfläche der Abtasteinheit 7 die Planfläche des ersten ebenen Kupplungsteils 13a bildet.

In ebenfalls nicht dargestellter Weise kann die Gleitschicht auch auf der Planfläche des ersten ebenen Kupplungteils 13a angebracht sein und mit der sphärischen Stirnfläche des Stiftes des zweiten Kupplungsteils 13b in ständigem Kontakt stehen.

## Patentansprüche

1. Positionsmeßeinrichtung zur Messung der Relativlage zweier Objekte, bei der die Teilung eines mit dem einen Objekt verbundenen Teilungsträgers von einer Abtasteinheit (7) abgetastet wird, die am anderen Objekt oder an einem daran angebrachten Mitnehmer (10) über eine in Meßrichtung steife Kupplung (13) gelenkig angekoppelt und an einer von der Führung der beiden Objekte unabhängigen Hilfsführung verschiebbar ist, und bei der die Kupplung (13) zwei sich kontaktierende Kupplungsteile (13a, 13b) aufweist, dadurch gekennzeichnet, daß sich zwischen den beiden Kupplungsteilen (13a, 13b) eine Gleitschicht (16) befindet.

2. Meßeinrichtung nach Anspruch 1, dadurch gekennzeichnet, daß das erste Kupplungsteil (13a) in Form einer ebenen Platte an der Abtasteinheit (7) und das zweite Kupplungsteil (13b) in Form eines Stiftes mit einer sphärischen Stirnfläche am Mitnehmer (10) befestigt sind.

3. Meßeinrichtung nach den Ansprüchen 1 und 2, dadurch gekennzeichnet, daß die sphärische Stirnfläche des zweiten Kupplungsteils (13b) mit der Gleitschicht (16) überzogen ist.

4. Meßeinrichtung nach Anspruch 1, dadurch gekennzeichnet, daß die beiden Kupplungsteile (13a, 13b) der Kupplung (13) durch Federn (17) in ständigem Kontakt stehen.

5. Meßeinrichtung nach Anspruch 1, dadurch gekennzeichnet, daß die Gleitschicht (16) aus PTFE-haltigem Kunststoff besteht.

## Claims

1. A position measuring device for measuring the relative position of two objects, in which the scale of a scale carrier connected to one of the objects is sensed by a sensing unit (7), which is coupled in an articulated way to the other object or to a driving part (10) fitted thereto by a coupling (13) which is stiff in the direction of measurement and can slide on an auxiliary guide independent of the guide for the two objects, and in which the coupling (13) has two contacting coupling parts (13a, 13b), characterized in that a slip layer (16) is provided between the two coupling parts (13a, 13b).

2. A measuring device according to claim 1, characterized in that the first coupling part (13a) in the form of a flat plate is fixed to the sensing unit (7) and the second coupling part (13b) in the form of a rod with a spherical end surface is fixed to the driving part (10).

3. A measuring device according to claims 1 and 2, characterized in that the spherical end surface of the second coupling part (13b) is coated with the slip layer (16).

4. A measuring device according to claim 1, characterized in that the two coupling parts (13a, 13b) of the coupling (13) are in constant contact by virtue of springs (17).

5. A measuring device according to claim 1, characterized in that the slip layer (16) consists of plastics material containing PTFE.

## Revendications

1. Dispositif de mesure de position pour mesurer la position relative de deux objets dans lequel la graduation d'un support gradué lié à l'un des objets est exploré par une unité d'exploration (7), accouplée de manière flexible à l'autre objet ou à un taquet d'entraînement (10) qui s'y trouve fixé par l'intermédiaire d'un accouplement (13) rigide dans la direction de la mesure, et coulissant sur une glissière auxiliaire indépendante de la glissière des deux objets et dans lequel l'accouplement (13) présente deux pièces d'accouplement (13a,13b) en contact mutuel,
caractérisé par le fait qu'une couche de glissement (16) se trouve entre les deux pièces d'accouplement (13a, 13b).

2. Dispositif de mesure selon la revendication 1 caractérisé par le fait que la première pièce d'accouplement (13a) en forme de plaque plane et la deuxième pièce d'accouplement (13b) en forme de pointe à surface frontale sphérique sont fixées respectivement sur l'unité d'exploration (7) et sur le taquet d'entraînement (10).

3. Dispositif de mesure selon les revendications 1 et 2, caractérisé par le fait que la surface frontale sphérique de la deuxième pièce d'accouplement (13b) est recouverte par la couche de glissement (16).

4. Dispositif de mesure selon la revendication 1 caractérisé par le fait que les deux pièces d'accouplement (13a, 13b) de l'accouplement (13) sont en contact permanent au moyen de ressorts (17).

5. Dispositif de mesure selon la revendication 1 caractérisé par le fait que la couche de glissement (16) se compose de matière synthétique comportant du PTFE.
